(19) **Europäisches Patentamt**
**European Patent Office**
**Office européen des brevets**

(11) **EP 4 645 200 A1**

(12) **EUROPEAN PATENT APPLICATION**
published in accordance with Art. 153(4) EPC

(43) Date of publication:
**05.11.2025 Bulletin 2025/45**

(21) Application number: **22970243.6**

(22) Date of filing: **28.12.2022**

(51) International Patent Classification (IPC):
***G06Q 40/08*** (2012.01)

(52) Cooperative Patent Classification (CPC):
**G06Q 40/08**

(86) International application number:
**PCT/KR2022/021524**

(87) International publication number:
**WO 2024/143604 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Oh, Jung Gun**
**Yongin-si, Gyeonggi-do 16975 (KR)**

(72) Inventor: **Oh, Jung Gun**
**Yongin-si, Gyeonggi-do 16975 (KR)**

(74) Representative: **Rau, Schneck & Hübner**
**Patentanwälte Rechtsanwälte PartGmbB**
**Königstraße 2**
**90402 Nürnberg (DE)**

(54) **SHOPPING PENSION, SHOPPING BONUS, SALES PENSION, AND SALES BONUS PAYMENT SYSTEM AND METHOD LINKED TO COMMERCIAL TRANSACTION**

(57) Disclosed is a shopping pension payment system and method which accumulates a portion of a profit when a product subject to shopping pension is sold and pays shopping pension to a buyer of the product subject to shopping pension for a predetermined period of time. To this end, provided is the shopping pension payment system linked to a commercial transaction, which includes: a purchase information collection module for collecting purchase information; a purchase code registration module for registering a transaction code for allowing a purchase order for each purchase information to be identified; a purchase reserve point calculation module for calculating a reserve point for each senior transaction code at an agreed reserve rate for each payment of the transaction code and generating purchase reserve point information for each transaction code; a first storage module for storing purchase information in which the transaction code is registered, purchase reserve point information for each transaction code, and shopping pension information including a shopping pension payment period, a total shopping pension amount, and pension start reserve fund; and a shopping pension payment module for paying the total amount of shopping pension divided over the shopping pension payment period when the accumulated purchase reserve point of the transaction code reaches the pension start reserve fund. According to the present invention, the shopping pension can be paid to the buyer having bought the product subject to shopping pension for a predetermined period of time by using funds raised through the sale of the product subject to shopping pension so as to ease the burden of shopping for consumers and boost sales of products subject to shopping pension.

EP 4 645 200 A1

FIG.2

EP 4 645 200 A1

FIG.2

- 100 User terminal
- 200 Online shopping mall server
- 400 Offline affiliated store terminal
- 300
  - 310 Shopping pension management unit
    - 311 Purchase information collection module
    - 312 Purchase code registration module
    - 313 Purchase reserve points calculation module
    - 314 First storage module
    - 315 Shopping pension payment module
    - 316 Shopping bonus payment module
  - 320 Sales pension management unit
    - 321 Sales information collection module
    - 322 Sales code registration module
    - 323 Sales reserve point calculation module
    - 234 Second storage module
    - 325 Sales pension payment module
    - 326 Sales bonus payment module

**Description**

[Technical Field]

The present invention relates to a shopping pension payment system and a method for paying shopping pension to a buyer in connection with transactions generated online and offline, and more particularly, to a shopping pension payment system and method which accumulates a portion of a sales profit when a product subject to shopping pension is sold and pays shopping pension to a buyer of the product subject to shopping pension for a predetermined period of time.

[Background Art]

In general, a pension system is a type of social insurance system in which workers or citizens pay a predetermined amount of money for a certain period of time and receive a pension when an insured event such as old age, disability, retirement, or death occurs.

The pension system is divided into a public pension, a private pension, and an individual pension depending on an operating entity.

The public pension is managed by the operating entity, such as the state or a special corporation established by law, and a national pension, a civil servant pension, a military pension, and a private school pension are applied in the Republic of Korea.

In addition, the private pension is implemented to supplement public pensions, and corresponds to a corporate pension and an agreement pension.

Further, the private pension is a pension managed by financial institutions such as life insurance companies by recruiting policyholders.

However, since the above conventional pension system is operated based on insurance premiums paid regularly by pension holders, a person having no income or financial affordability may have difficulty joining and maintaining the membership.

The national pension operates a system of deferring a payment of insurance premiums when there is no income for a long period of time. However, it is difficult to expect substantial stability in retirement life with only the national pension because the amount of pension received is correspondingly low when the amount of insurance premiums paid is low.

In addition, many experts agree that the national pension may be depleted within a few decades when the current system is maintained, and it is difficult to avoid the unreasonable situation in which the burden on pension holders are significantly increased and benefits are decreased even when pension payments are reduced or insurance premiums are raised in order to prevent fund depletion.

Accordingly, there is growing interest in new pension systems or methods that can supplement or replace existing pension systems.

For example, Korean Patent Registration No. 10-1427390 discloses a pension accumulation system for allowing a user to integrate points accumulated by each company through online and offline commercial transactions, convert the integrated points into cash, and then join pension products by using the converted amount.

However, since the above pension accumulation system is a scheme of paying the points converted into insurance premiums after signing a contract with a specific insurance company, there is a problem that the pension holder is required to pay the shortfall in cash when the point redemption amount is less than the insurance premium.

Accordingly, it is not significantly different from the existing individual pension because the insurance premium is required to be paid in cash when accumulated points are not present due to absence of consumption expenditure.

[Disclosure]

[Technical Problem]

Therefore, a first object of the present invention is to provide a shopping pension payment system linked to commercial transactions, in which a buyer purchases a product subject to shopping pension (a shopping pension product) through a commercial transaction, all the funds for pension start are prepared through subsequent commercial transactions, and then the shopping pension is paid to the buyer of the first commercial transaction, even when a predetermined amount is not paid for a certain period of time.

In addition, a second object of the present invention is to provide a shopping pension payment method linked to commercial transactions, in which a shopping pension is provided for an individual commercial transaction other than accumulated shopping amounts of purchased by the buyer, so the buyers' consumption is promoted.

**EP 4 645 200 A1**

[Technical Solution]

In order to achieve the above-described first object of the present invention, one embodiment of the present invention provides a shopping pension payment system linked to commercial transactions, which includes: a purchase information collection module for collecting purchase information including buyer information and payment amount when a product subject to shopping pension is purchased; a purchase code registration module for registering a transaction code for identifying a purchase order for each purchase information; a purchase reserve point calculation module for calculating reserve points for each senior transaction code at an agreed reserve rate for each payment amount of the transaction code and generating purchase reserve point information for each transaction code; a first storage module for storing purchase information in which the transaction code is registered, purchase reserve point information for each transaction code, and shopping pension information including a shopping pension payment period, a total shopping pension amount, and pension start reserve fund; and a shopping pension payment module for analyzing the purchase reserve point information for each transaction code stored in the first storage module, and paying the total shopping pension amount divided over the shopping pension payment period to a recipient set in the purchase information registered through the transaction code when the accumulated purchase reserve points of the transaction code reach the pension start reserve fund.

In addition, in order to achieve the above-described second object of the present invention, one embodiment of the present invention provides a shopping pension payment method linked to commercial transactions, which includes: a setting step of storing shopping pension information including a shopping pension payment period, a total shopping pension amount, and pension start reserve fund in a first storage module; a transaction information collection step in which a purchase information collection module collects purchase information including buyer information and payment amount of a product subject to shopping pension from an online shopping mall server or an offline affiliated store terminal; a code registration step in which a purchase code registration module registers a transaction code for identifying a purchase order for each of the purchase information and stores the registered transaction code in the first storage unit; a reserve point calculation step in which a purchase reserve point calculation module calculates a reserve point for each senior transaction code at an agreed reserve rate for each payment amount of the transaction code and generates purchase reserve point information for each transaction code; and a shopping pension payment step in which a shopping pension payment module analyzes the purchase reserve point information for each transaction code stored in the first storage module, and pays the total shopping pension amount divided over the shopping pension payment period to a recipient set in the purchase information registered through the transaction code when the accumulated purchase reserve points of the transaction code reach the pension start reserve fund.

[Advantageous Effects]

According to the present invention, the shopping pension is paid to the buyer having bought the product subject to shopping pension for a predetermined period of time by using funds raised through the sale of the product subject to shopping pension, so that the burden of shopping for consumers can be eased and sales of products subject to shopping pension can be boosted.

In addition, according to the present invention, the sales pension is paid to a seller having sold a product subject to sales pension (a sales pension product) for a predetermined period of time by using funds raised through the sale of the product subject to sales pension, so that an amount greater than the amount deducted when the product subject to sales pension is sold can be received as a pension.

Further, according to the present invention, because the shopping is getting an income for a shopping pension recipient with a high shopping bonus payment rate, more products subject to shopping pension can be promoted and purchased.

Further, according to the present invention, a code is registered for each purchase of product subject to shopping pension and a shopping pension determined by the code is paid other than granting vested rights based on the joining order to the shopping pension service, so that anyone can be provided with an equal opportunity to obtain a shopping pension.

Further, according to the present invention, the timing of receiving the shopping pension may be brought forward when more buyers purchase the product subject to shopping pension, so that the promotion of shopping pension services by buyers of products subject to shopping pension can be encouraged.

[Description of Drawings]

FIG. 1 is a configuration diagram for explaining a shopping pension payment system according to the present invention.

FIG. 2 is a block diagram for explaining the shopping pension payment system according to the present invention.

FIG. 3 is a schematic diagram showing a binary tree structure sorted according to the purchase order of purchase information.

FIGS. 4 and 5 are schematic diagrams showing the code-off of a payment code in which pension start reserve fund is accumulated through repositioning of the binary tree structure.

FIG. 6 is a flowchart for explaining a shopping pension payment method according to the present invention.

[Best Mode]

[Mode for Invention]

Hereinafter, a shopping pension payment system linked to commercial transactions (hereinafter referred to as "shopping pension payment system") according to the preferred embodiments of the present invention will be described in detail with reference to the accompanying drawings.

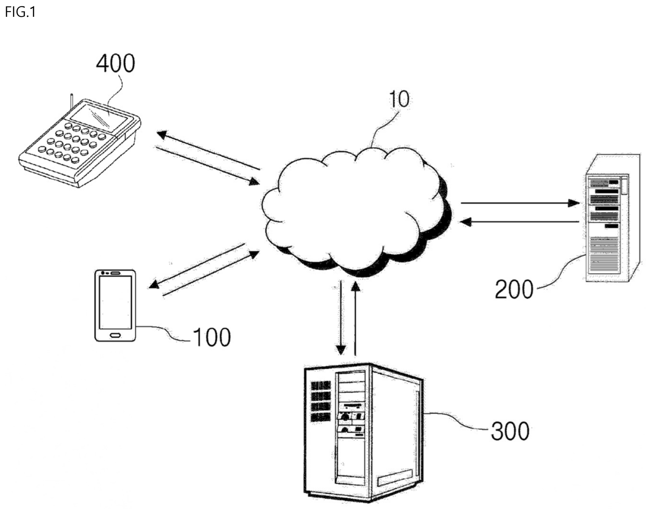

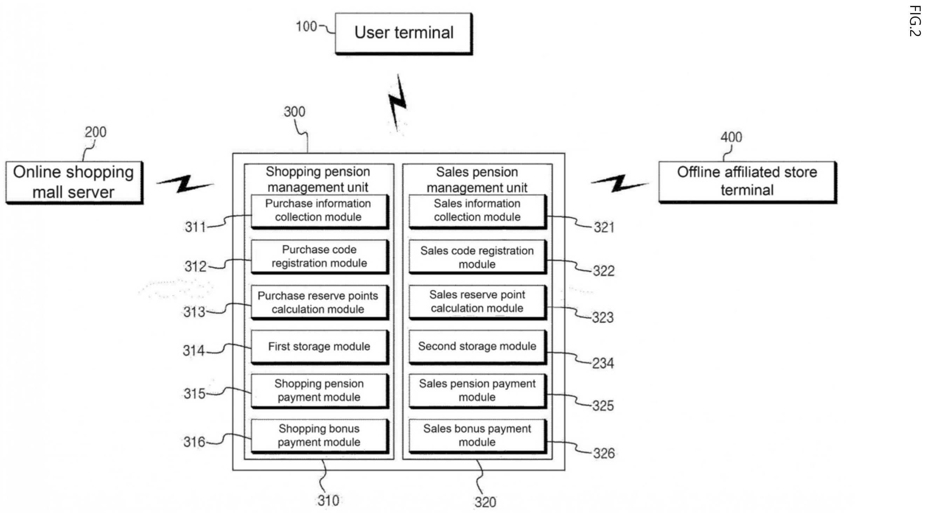

FIG. 1 is a configuration diagram for explaining a shopping pension payment system according to the present invention, and FIG. 2 is a block diagram for explaining the shopping pension payment system according to the present invention.

Referring to FIGS. 1 and 2, the shopping pension payment system according to the present invention includes a user terminal 100 connected to a wired/wireless communication network (hereinafter referred to as "communication network"), an online shopping mall server 200 that sells a shopping pension product to allow a user of the user terminal 100 to purchase the shopping pension product online, and transmits, when the shopping pension product is purchased by the user, purchase information including buyer information and payment amount through the communication network, and a pension management server 300 that collects the purchase information including the buyer information and the payment amount to register a transaction code, calculates reserve points for each transaction code at an agreed reserve rate for each payment of the transaction code to generate purchase reserve point information for each transaction code, and pays a total amount of shopping pension divided over a shopping pension payment period when the accumulated purchase reserve points of the transaction code reach a pension start reserve fund, and selectively, may further include an offline affiliated store terminal 400 that transmits purchase information including buyer information and payment amount of a buyer having purchased a shopping pension product offline through the communication network. The shopping pension product refers to a product and a service linked to the shopping pension service.

Hereinafter, each component will be described in more detail with reference to the accompanying drawings.

Referring to FIGS. 1 and 2, the shopping pension payment system according to the present invention includes the user terminal 100.

The user terminal 100 is configured to receive individual identification number (ID) information input from the user in order to participate in the shopping pension service linked to commercial transactions, and receive information on a recipient to receive a shopping pension, and transmits the ID information and the recipient information to the online shopping mall server 200 for selling shopping pension products or the pension management server 300 via the communication network.

In addition, when the ID information and the recipient information are provided from the user terminal 100 to the online shopping mall server 200, the online shopping mall server 200 transmits the ID information and the recipient information to the pension management server 300.

The ID information may include at least one among user's date of birth, user's address, user's phone number, user's email address, and ID and password for login.

The recipient information may include financial account information such as bank account or securities company account.

In addition, the user terminal 100 generates purchase request information for a shopping pension product selected by the user and transmits the generated purchase request information to the online shopping mall server 200.

Further, the user terminal 100, after purchasing the shopping pension product, may set a recipient of shopping pension and a recipient of shopping bonus differently and transmit the information on recipients to the online shopping mall server 200. For example, when purchasing a shopping pension product through a gift from the online shopping mall server 200, the user terminal 100 may select a person to receive the gift as the recipient of shopping pension and a buyer as the recipient of shopping bonus.

The user terminal 100 refers to a device for connecting to the pension management server 300 for providing the shopping pension service through a wireless communication network including multiple base stations, base station controllers, mobile communication switches, WAP gateways and the like, and a wired communication network such as the Internet, and may include a wireless terminal and a wired terminal.

The wireless terminal may include a smartphone, a tablet PC, and a laptop computer, and the wired terminal may include a personal computer, a communication terminal, and a smart TV having an Internet access tool.

As needed, the user terminal 100 may be installed with a pension service application that connects to the pension management server 300 to perform a membership registration process for receiving shopping pension services and provides guidance on online shopping malls and offline affiliated stores that sell shopping pension products. In addition, the pension service application may also connect to the pension management server 300 to display information on shopping pension products sold directly by the pension server.

Referring to FIGS. 1 and 2, the shopping pension payment system according to the present invention includes the online shopping mall server 200.

The online shopping mall server 200 is configured to be connected to the user terminal 100 through the communication network, and connected to the pension management server 300 on wire or wirelessly in close proximity or remotely via the communication network, and displays information about shopping pension products on sale on web pages.

In addition, the online shopping mall server 200 sells a shopping pension product, generates buyer information using ID information about the user of the user terminal 100 when the shopping pension products is purchased through the user terminal 100, and transmits purchase information including the buyer information and payment amount to the pension management server 300 via the communication network. The buyer information may include a personal identification code.

In addition, the purchase information may further include name, payment amount, payment time, purchase cost, and the like of the shopping pension product.

Further, the online shopping mall server 200 sells a sales pension product, generates seller information about a seller having supplied the sales pension product to the online shopping mall server 200 when the sales pension product is sold, and transmits sales information including the seller information and payment amount to the pension management server 300 via the communication network. The sales information may include name, payment amount, payment time, margin rate, purchase cost, and the like of the sales pension product.

In addition, the sales pension product may include the same products as the shopping pension product. In this case, when the sales pension product is purchased through the user terminal 100, the online shopping mall server 200 transmits the purchase information, the buyer information, the sales information, and the seller information to the pension management server 300 through the communication network.

Referring to FIGS. 1 and 2, the shopping pension payment system according to the present invention includes the pension management server 300.

The pension management server 300 is configured to provide a shopping pension service, and to this end, is connected to the user terminal 100, the online shopping mall server 200, and the offline affiliated store terminal 400. In this case, the pension management server 300 stores the ID information and the recipient information transmitted from the user terminal 100, the online shopping mall server 200 or the offline affiliated store terminal 400 in a customer database (DB) of the shopping pension service.

Accordingly, the pension management server 300 is provided with the ID information and the recipient information directly from the user terminal 100, or indirectly through the online shopping mall server 200 or the offline affiliated store terminal 400.

As needed, the pension management server 300 may earn operating profits by depositing pension start reserve fund prepared for the shopping pension service into a bank account or securities company account. To this end, the pension management server 300 may include an operating unit (not shown) for to automatically transferring sales profit of the payment deposited into a financial account for pension provision, excluding operating expenses, to a financial account for pension operation. The operating unit transfers a portion of the expenses in the financial account for pension operation to the financial account for pension provision and uses the portion for the pension payment at requests of a shopping pension management unit 310 and a sales pension management unit 320.

Meanwhile, the pension management server 300 may provide the sales pension service, and to this end, is connected to the user terminal 100, the online shopping mall server 200, and the offline affiliated store terminal 400. In this case, the pension management server 300 stores the ID information and the recipient information transmitted from the user terminal 100, the online shopping mall server 200 or the offline affiliated store terminal 400 in a customer database (DB) of the sales pension service.

When the purchase information including the buyer information and the payment amount is transmitted from the online shopping mall server 200 or the offline affiliated store terminal 400, the pension management server 300 registers a transaction code capable of identifying the purchase order into the purchase information, and then stores the purchase information registered with the transaction code in a shopping pension product transaction DB.

In addition, the pension management server 300 calculates reserve points for each senior transaction code at an agreed reserve rate for each payment of the transaction code, and pays a total shopping pension amount divided over the shopping pension payment period when the accumulated purchase reserve points for the transaction code reach the pension start reserve fund.

When the sales information including the seller information and the payment amount is transmitted from the online shopping mall server 200 or the offline affiliated store terminal 400, the pension management server 300 registers a transaction code capable of identifying the purchase order into the sales information, and then stores the sales information registered with the transaction code in a sales pension product transaction DB.

In addition, the pension management server 300 calculates reserve points for each senior transaction code at an agreed reserve rate for each payment of the transaction code, and pays a total sales pension amount divided over the sales pension payment period when the accumulated sales reserve points for the transaction code reach the pension start reserve fund.

Meanwhile, in the case that the shopping pension product and the sales pension product are the same and both of the shopping pension service and the sales pension service are provided through transactions of the products, a single transaction code for providing the shopping pension service and the sales pension service is registered in each of purchase information and sales information.

Accordingly, all or only some of shopping pension, shopping bonus, sales pension and sales bonus may be applied to a single transaction.

In addition, the pension management server 300 divides the pension start reserve fund raised through subsequent transactions into shopping pension, shopping bonus, sales pension and sales bonus for use.

For example, when an agreed shopping pension amount is a, an agreed shopping bonus amount is b, an agreed sales pension amount is c, an agreed sales bonus amount is d, and a total amount of pension start reserve fund raised each week is e, the shopping pension is distributed as $\dfrac{a}{e}$, the shopping bonus is distributed as $\dfrac{b}{e}$, the sales pension is distributed as $\dfrac{c}{e}$, and the sales bonus is distributed as $\dfrac{d}{e}$.

In addition, the amounts of the shopping pension, the shopping bonus, the sales pension, and the sales bonus described as above are determined at the time the transaction code is generated, and shopping pension amount and recipient, shopping bonus amount and recipient, sales pension amount and recipient, and sales bonus amount and recipient are specified at the time the transaction code is generated. In addition, when reserve points subject to subsequent transactions are accumulated in a senior transaction code, the reserve points are distributed to each pension and bonus to accumulate pensions and pay bonuses. Further, because the distribution is performed according to the rate, the timings when the corresponding transaction codes are code-off (graduated) are the same for the shopping pension, the shopping bonus, the sales pension, and the sales bonus.

The pension management server 300 may pay the shopping pension and the sales pension in equal installments over a preset period. However, when it becomes difficult to pay in installments over a preset period due to difficulties in managing costs or computer failures, the payment may be automatically extended.

As a specific aspect, the pension management server 300 according to the present invention includes a communication unit (not shown) and the shopping pension management unit 310, and selectively, may further include the sales pension management unit 320.

The communication unit constituting the pension management server 300 according to the present invention is configured to be connected to the user terminal 100, the online shopping mall server 200, and the offline affiliated store terminal 400 through the communication network, and receives ID registration information and recipient information from the user terminal 100, the online shopping mall server 200, or the offline affiliated store terminal 400 and stores the received information in the customer DB.

In addition, the communication unit is provided with the purchase information from the online shopping mall server 200 or the offline affiliated store terminal 400 and stores the purchase information in the shopping pension product transaction DB. The purchase information includes the buyer information and the payment amount. Further, the communications unit is provided with the sales information from the online shopping mall server 200 or the offline affiliated store terminal 400 and stores the sales information in the sales pension product transaction DB. The sales information includes the seller information and the payment amount.

The shopping pension management unit 310 constituting the pension management server 300 according to the present invention is configured to provide the shopping pension service, and may include a purchase information collection module 311, a purchase code registration module 312, a purchase reserve points calculation module 313, a first storage module 314, and a shopping pension payment module 315, and selectively, may further include a shopping bonus payment module 316.

The purchase information collection module 311 is configured to collect the purchase information including the buyer information and the payment amount when the shopping pension product is purchased, and detects the purchase information provided from the online shopping mall server 200 or the offline affiliated store server and then stored in the first storage module 314.

For example, the purchase information collection module 311 may be connected to the online shopping mall server 200 for selling the shopping pension product through the communication unit to collect the purchase information from the online shopping mall server 200.

In addition, the purchase information collection module 311 may be connected to the payment terminal of the offline affiliated store for selling the shopping pension product through the communication unit to collect the purchase information from the payment terminal.

The purchase code registration module 312 is configured to register a transaction code for identifying the purchase order for each purchase information, and stores purchase information having a registered transaction code in the first storage module 314.

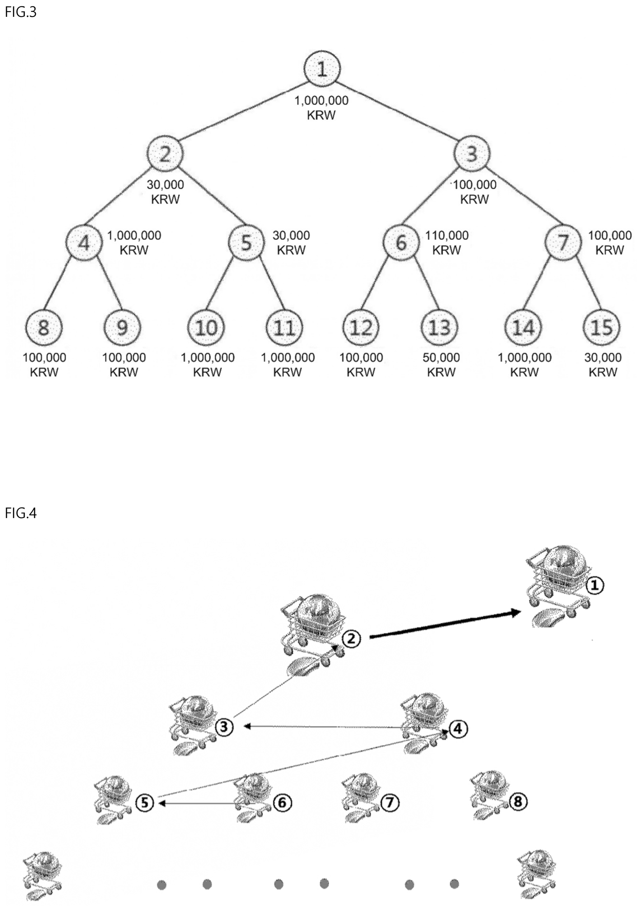

FIG. 3 is a schematic diagram showing a binary tree structure sorted according to the purchase order of purchase information.

The purchase points calculation module 313 is configured to calculate reserve points for each senior transaction code at an agreed reserve rate for each payment amount of the transaction code registered to the purchase information to generate purchase reserve point information for each transaction code, and may use a binary tree structure as shown in FIG. 3. The binary tree structure refers to a layout structure, as shown in FIG. 3, in which positions are increased by multiples of 2 at each level starting from the vertex.

Referring to FIG. 3, the purchase points calculation module 313 is configured to sort each transaction code into a binary tree structure according to the purchase order, calculate reserve points at an agreed reserve rate for each payment amount of the transaction code, and generate purchase reserve point information for accumulating the reserve points for each senior transaction code connected in the tree.

For example, reserve points generated by transaction codes of the 8th and 9th priorities are accumulated in the 1st, 2nd and 4th transaction codes connected in the tree (line), and reserve points generated by transaction codes of the 12nd and 13rd priorities are accumulated in the 1st, 3rd and 6th transaction codes connected in the tree (line).

In other words, when the agreed reserve rate is 2%, 20,000 KRW (1,000,000 KRW * 0.02) generated by the 10th transaction code is accumulated to the 1st, 2nd, and 5th transaction codes, and 1,000 KRW (500,000 KRW * 0.02) generated by the 13rd transaction code is accumulated to the 1st, 2nd, and 5th transaction codes.

Meanwhile, the purchase points calculation module 313 may determine an amount obtained by deducting a value-added tax from the payment amount as a subject for calculating the reserve points. For example, when the payment amount is 110,000 KRW as in the 6th priority of FIG. 3, and the agreed reserve rate is 2%, the purchase points calculation module 313 generates 2,000 KRW as a purchase reserve points and generates purchase reserve point information for accumulating 2,000 KRW to the 1st and 3rd transaction codes, respectively.

As one embodiment, when purchase information is provided through an online shopping mall server operated by a shopping pension service provider, the purchase points calculation module 313 according to the present invention calculates sales profit by deducting purchase cost from the payment amount for the shopping pension product, and adds the sales profit to the shopping pension payment reserve fund stored in the first storage module 314.

As another embodiment, when receiving the purchase information through an offline affiliated store terminal 400, the purchase points calculation module 313 according to the present invention calculates an agreed affiliated store affiliation cost for each payment amount of the transaction code registered in the purchase information, and adds the affiliated store affiliation cost to the shopping pension payment reserve fund stored in the first storage module 314. The affiliated store affiliation cost may be determined as 5% to 20% of the payment amount, but is not limited thereto. In addition, the purchase points calculation module 313 determines a subject for calculating the affiliated store affiliation cost by using the amount after deducting value-added tax from the payment amount.

Accordingly, when a shopping pension product is traded, the purchase points calculation module 313 calculates reserve points to generate purchase reserve point information for accumulating the reserve points for each senior transaction code, and calculates and then adds sales profits or affiliated store affiliation costs so as to be accumulated in the shopping pension payment reserve fund.

The first storage module 314 is configured to store shopping pension information including shopping pension payment period, total shopping pension amount and pension start reserve fund, purchase information having a registered transaction code, and purchase reserve point information, and may include a hard disk drive (HDD) or a solid state disk (SSD). As needed, the shopping pension information may further include an agreed reserve rate for the payment amount.

It is desirable that the total shopping pension amount be between 50% and 100% of the payment amount excluding value-added tax, but is not limited thereto.

For example, when the total shopping pension amount is 100% of the payment amount excluding the value-added tax and the payment amount is 110,000 KRW, the buyer of the shopping pension products may receive a total of 100,000 KRW in shopping pension divided into several installments.

In addition, the first storage module 314 may store new member information having registered a personal identification code assigned to the buyer information as a recommender.

When the accumulated purchase reserve points in the transaction code reach the pension start reserve fund calculated upon generation of the transaction code, the shopping pension payment module 315 pays the shopping pension in installments to the buyer having been assigned the transaction code.

The pension start reserve fund of the transaction code is determined as 150,000 KRW when the shopping pension of the transaction code is 100,000 KRW, the shopping bonus is 50,000 KRW, and the sales pension and the sales bonus are 0 KRW. In addition, the pension start reserve fund of the transaction code is determined as 400,000 KRW when the shopping pension of the transaction code is 100,000 KRW, the shopping bonus is 50,000 KRW, and the sales bonus are 50,000 KRW.

In addition, the shopping pension payment module 315 analyzes the purchase reserve point information for each transaction code stored in the first storage module, and pays the total shopping pension amount divided over the shopping pension payment period to a recipient set in the purchase information registered through the transaction code when the accumulated purchase reserve points of the transaction code reach the pension start reserve fund. It is desirable that the payment period for this shopping pension be 12 to 36 months, but is not limited thereto.

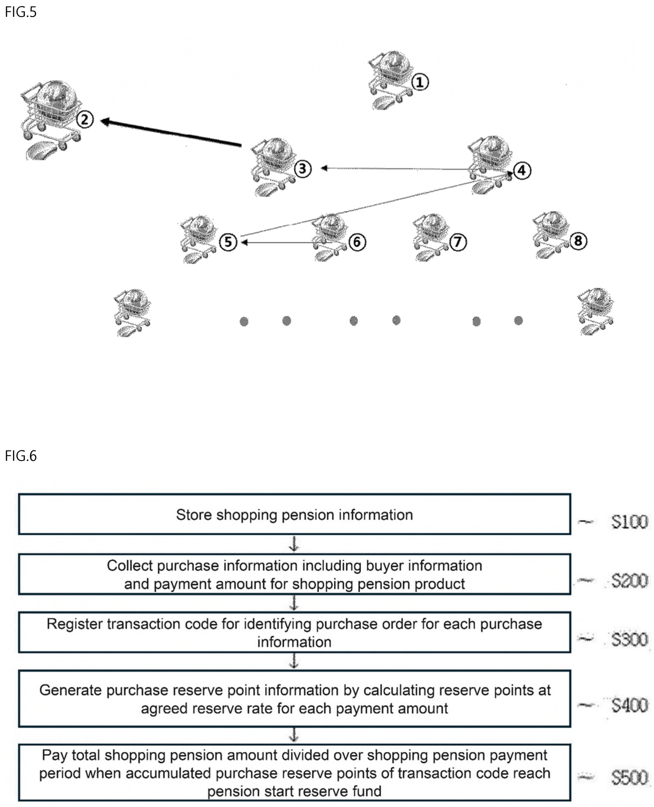

FIGS. 4 and 5 are schematic diagrams showing the code-off of a payment code in which pension start reserve fund is accumulated through repositioning of the binary tree structure.

When the reserve points accumulated in the transaction code ① at the top of the binary tree structure reach the pension start reserve fund, the shopping pension payment module 315 removes (codes off) the transaction code ① at the top of the binary tree structure as shown in FIG. 4, and re-sorts positioning of subsequent transaction codes. The re-sorting of positioning may be performed weekly.

Further, when reserve points for a senior transaction code in the binary tree structure have not yet reached the pension start reserve fund, and reserve points for a subsequent transaction code reach the pension start reserve fund, the shopping pension payment module 315 removes (codes off) the subsequent transaction code from the binary tree structure as shown in FIG. 5, and re-sorts the positioning of the remaining transaction codes.

For example, in FIG. 5, when the 1st priority payment amount of is 1,000,000 KRW, the 2nd priority payment amount is 30,000 KRW, and the 1st and 2nd priority total shopping pension amount and total shopping bonus amount are each 100%, the 1st priority pension start reserve fund is determined to be 2 million KRW, and the 2nd priority pension start reserve fund is determined to be 60,000 KRW.

In addition, when the agreed reserve rate is 2%, reserve points of 20,000 KRW (1,000,000 KRW * 0.02) generated by the 4th priority transaction code, reserve points of 600 KRW (30,000 KRW * 0.02) generated by the 5th priority transaction code, reserve points of 2,000 KRW (100,000 KRW * 0.02) generated by the 8th priority transaction code, reserve points of 2,000 KRW (100,000 KRW * 0.02) generated by the 9th priority transaction code, reserve points of 20,000 KRW (1,000,000 KRW * 0.02) generated by the 10th priority transaction code, and reserve points of 20,000 KRW (1,000,000 KRW * 0.02) generated by the 11st priority transaction code are accumulated in the 2nd priority transaction code, and accordingly, the 2nd priority pension start reserve fund is satisfied in level 2 of the binary tree structure (4th, 5th, 8th, 9th, 10th and 11th).

Whereas, because the pension start reserve fund does not reach 2 million KRW even when the reserve points accumulated in the 1st priority transaction code are accumulated up to the 3rd level (2nd to 15th priorities) of the binary tree structure, a situation occurs in which the reserve points accumulated in the 2nd priority transaction code reach the pension start reserve fund first, and accordingly, the 2nd priority transaction code is coded off before the 1st priority transaction code.

Accordingly, because the payment amount for transaction code may be different, a situation may occur in which a transaction code is coded off before the senior transaction codes as shown in FIG. 5 when the payment amount of the transaction code is small despite of the late order of transaction code.

The shopping bonus payment module 316 analyzes the number of members having signed up after being recommended by buyers of shopping pension products, and pays the shopping bonus weekly separate from the shopping pension until the agreed amount (total shopping bonus amount) is reached.

For example, the shopping bonus payment module 316 pays weekly the shopping bonus accumulated through a subsequent transaction code linked in the binary tree structure, starting from two weeks after a transaction of a shopping pension product is completed.

Accordingly, since the shopping bonus payment module 316 pays the accumulated shopping bonus every week to the buyer of the shopping pension product, the amount of the shopping bonus may change every week.

In addition, the shopping bonus payment module 316 analyzes the buyer information and new member information when the shopping pension product is purchased, detects the number of recommended members recommended and signing up for the shopping pension product during a previous predetermined period, and calculates a shopping bonus at an agreed payment rate subject to the payment amount based on the number of recommended members. The shopping bonus payment module 316 uses an amount after deducting value-added tax from the payment amount as a subject for calculating the shopping bonus. In addition, the predetermined period may be set to 6 to 12 months, but is not limited thereto.

For example, the shopping bonus payment module 316 may calculate the shopping bonus as in Table 1 below when a recruiting period for recommended members during the previous period of the transaction is 6 to 12 months.

[Table 1]

| Recommended members (Number of persons) | Payment rate of shopping bonus | | |
| --- | --- | --- | --- |
| | Level 1 | Level 2 | Level 3 |
| 0 | 100% | 30% | 10% |
| 1-2 | 110% | 50% | 10% |
| 3-9 | 130% | 70% | 20% |
| 10-19 | 160% | 80% | 30% |
| 20 or more | 200% | 100% | 50% |

As above, the shopping bonus payment module 316 may calculate the shopping bonus of 0% to 200% by applying one of levels 1, 2 and 3 depending on the administrator's settings. Levels 1 to 3 may be determined based on the number of recipients of the shopping pension service and service operating profits.

As needed, the shopping bonus payment module 316 may pay the entire shopping bonus in cash to the recipients subject to the purchase information, or pay a portion in cash to the recipients and the remainder as shopping points that can be used to purchase shopping pension products. For example, the shopping bonus payment module 316 pays in cash up to 100% of the shopping bonus, and pays any amount exceeding the 100% as shopping points.

Accordingly, the shopping bonus payment module 316 may pay a portion of the shopping bonus in cash to a financial account, and pay the remainder as shopping points to an online shopping mall account through the online shopping mall server 200. The sales pension management unit 320 constituting the pension management server 300 according to the present invention is configured to provide a sales pension service, includes a sales information collection module 321, a sales code registration module 322, a sales reserve points calculation module 323, a second storage module 324, and a sales pension payment module 325, and selectively, may further include a sales bonus payment module 326.

The sales information collection module 321 is configured to collect sales information when a sales pension product is sold, so as to detect sales information provided from the online shopping mall server 200 or the offline affiliated store server. The sales information includes the seller information and the payment amount.

For example, the sales information collection module 321 may be connected to the online shopping mall server 200 for selling the sales pension product through the communication unit to collect the sales information from the online shopping mall server 200.

In addition, the sales information collection module 321 may be connected to the payment terminal of the offline affiliated store for selling the sales pension product through the communication unit to collect the sales information from the payment terminal.

As needed, when the sales information provided from the online shopping mall server 200 or the offline affiliated store server is stored in the second storage module 324, the sales information collection module 321 detects the sales information from the second storage module 324.

The sales code registration module 322 is configured to register a transaction code for identifying the sales order for each sales information, and stores the sales information having the registered transaction code in the second storage module 324.

The sales point calculation module 323 is configured to calculate reserve points for each senior transaction code at an agreed reserve rate for each payment amount of the transaction code registered to the sales information to generate sales reserve point information for each transaction code, and may use a binary tree structure.

The sales point calculation module 323 is configured to sort each transaction code into a binary tree structure according to the sales order, calculate reserve points at an agreed reserve rate for each payment amount of the transaction code, and generate sales reserve point information for accumulating the reserve points for each senior transaction code connected in the tree.

In addition, the sales point calculation module 323 may determine an amount obtained by deducting a value-added tax from the payment amount as a subject for calculating the reserve points. For example, when the payment amount is 110,000 KRW and the agreed reserve rate is 20%, the sales point calculation module 323 generates sales point information for accumulating 2,000 KRW as sales reserve points to the senior transaction code.

Further, the sales point calculation module 323 according to the present invention calculates an agreed sales pension service cost for each payment amount of the transaction code registered in the sales information, and adds the sales pension service cost to the sales pension payment reserve fund stored in the second storage module 324. The sales pension service cost may be determined as 5% to 30% of the payment amount, but is not limited thereto. In addition, the sales point calculation module 323 determines a subject for calculating the sales pension service cost by using the amount after deducting value-added tax from the payment amount. Accordingly, the sales point calculation module 323 calculates reserve points, when the sales pension product is sold, to generate sales reserve point information for accumulating the reserve points for each senior transaction code, and calculates the sales pension service cost to add the sales pension service cost so as to be accumulated to the sales pension payment reserve fund.

As a result, an offline affiliated store owner having joined the sales pension service receives 50% to 100% of the payment amount as a sales pension instead of paying 20% of the payment amount as a cost for receiving the sales pension service.

The second storage module 324 is configured to store sales pension information including sales pension payment period, total sales pension amount and pension start reserve fund, sales information having a registered transaction code and sales reserve point information, and may use HDD, SSD or the like.

As needed, the second storage module 324 may be configured as a single storage device together with the first storage module 314.

In addition, the second storage module 324 may store a margin rate of the sales pension product.

Further, it is desirable that the total sales pension amount be between 0% and 100% of the payment amount excluding value-added tax, but is not limited thereto.

The sales pension payment module 325 is configured to pay the sales pension to the recipient of the transaction code for a predetermined period of time when a predetermined condition for the senior transaction code is satisfied, and it is desirable that the predetermined period be 36 to 60 months, but is not limited thereto.

The sales pension payment module 325 analyzes the sales reserve point information for each transaction code stored in the second storage module 324, and pays the total sales pension amount divided over the sales pension payment period to a recipient set in the sales information registered through the transaction code when the accumulated sales reserve points of the transaction code reach the pension start reserve fund.

The sales pension may complete accumulating the sales reserve points when the sales reserve points accumulated to the transaction code reach the pension start reserve fund, and the sales pension may be paid from the month following the month in completion of the accumulating the sales reserve points.

When the reserve points accumulated in the transaction code at the top of the binary tree structure reach the pension start reserve fund, the sales pension payment module 325, like the shopping pension payment module 315, removes (codes off) the transaction code at the top of the binary tree structure, and rearranges positioning of the subsequent transaction codes. The re-sorting of positioning may be performed weekly.

The sales bonus payment module 326 analyzes a contribution rate of raising financial resources of the shopping pension service to pay a sales bonus every week until the sales bonus paid in installments reaches the agreed amount (total sales bonus amount). For example, the sales bonus payment module 326 pays weekly the sales bonus accumulated through a subsequent transaction code linked in the binary tree structure, starting from two weeks after a transaction of a sales pension product is completed.

Accordingly, since the sales bonus payment module 326 pays the accumulated sales bonus every week to the buyer of the sales pension product, the amount of the sales bonus may change every week.

Further, when the sales pension product is sold, the sales bonus payment module 326 detects a margin rate of the sales pension product sold through the second storage module 324, and calculates a sales bonus at an agreed payment rate subject to the payment amount based on the margin rate. The sales bonus payment module 326 uses an amount after deducting value-added tax from the payment amount as a subject for calculating the sales bonus.

For example, the sales bonus payment module 326 calculates the total sales bonus amount by applying a 10% sales bonus payment rate when the sales margin is 30% or more and less than 35% compared to a sale price, calculates the total sales bonus amount by applying a 20% sales bonus payment rate when the sales margin is 35% or more and less than 40%, calculates the total sales bonus amount by applying a 35% sales bonus payment rate when the sales margin is 40% or more and less than 50%, calculates the total sales bonus amount by applying a 50% sales bonus payment rate when the sales margin is 50% or more and less than 60%, calculates the total sales bonus amount by applying a 65% sales bonus payment rate when the sales margin is 60% or more and less than 80%, and calculates the total sales bonus amount by applying a 80% sales bonus payment rate when the sales margin is 80% or more. As above, it is desirable that the total sales bonus amount be between 0% and 100% of the payment amount excluding value-added tax, but is not limited thereto.

Meanwhile, the sales pension management unit 320 may further include a sales amount payment module. When a payment amount for a sales pension product is deposited into a designated financial account at an offline affiliated store, the sales amount payment module provides a function to transfer the deposited payment amount into a financial account preset by an offline affiliated store owner after deducting a preset sales pension service cost.

For example, when the payment amount of 110,000 KRW for the sales pension product is deposited, the sales amount payment module deposits 90,000 KRW, which is the amount after deducting 20,000 KRW (20%) as the sales pension service cost from 110,000 KRW, into the financial account preset by the offline affiliated store owner.

In this case, the offline affiliated store owner receives a total of 100,000 KRW in sales pension in several installments instead of paying 20,000 KRW as the sales pension service cost in advance.

Referring to FIGS. 1 and 2, the shopping pension payment system according to the present invention includes the offline affiliated store terminal 400.

The offline affiliated store terminal 400 is connected to the pension management server 300 via the communication network and installed in the offline affiliate provided with the shopping pension service or the sales pension service.

The offline affiliated store sells a shopping pension product, generates buyer information by inputting ID information provided by a buyer into the offline affiliated store terminal 400 when the shopping pension product is purchased by the buyer on site, and transmits purchase information including the buyer information and payment amount to the pension management server 300 via the communication network. The purchase information may include name, payment amount, payment time, margin rate, cost price, sales price and the like of the shopping pension product.

In addition, when the offline affiliated store sells a sales pension product, and the sales pension product is sold to a customer on site, the offline affiliated store terminal 400 transmits sales information including seller information and payment amount to the pension management server 300 via the communication network. The sales information may include name, payment amount, payment time and the like of the sales pension product.

The offline affiliated store terminal 400 may include a PDA, IMT-2000, a smartphone, a notebook computer, a tablet PC, a communication terminal and the like.

FIG. 6 is a flowchart for explaining a shopping pension payment method according to the present invention. Meanwhile, a shopping pension payment method using the shopping pension payment system including the above-described elements will be described as follows with reference to FIG. 6.

Referring to FIG. 6, the shopping pension payment method of the present invention includes: a setup step S100 of setting up shopping pension information to provide a shopping pension to a buyer of a shopping pension product; a transaction information collection step S200 of collecting purchase information including buyer information and payment amount of the shopping pension product from an online shopping mall server 200 or an offline affiliated store terminal 400; a code registration step S300 of registering a transaction code to identify a purchase order for each purchase information; a reserve point calculation step S400 of calculating reserve points at an agreed reserve rate for each payment amount subject to purchase information; and a pension payment step S500 of paying a total shopping pension amount divided to buyers of purchases satisfying a shopping pension start condition.

In setup step S100 constituting the shopping pension payment method according to the present invention, shopping pension information including shopping pension payment period, total shopping pension amount, and pension start reserve fund is stored in the first storage module 314, so as to provide a shopping pension service. As needed, the shopping pension information may include a reserve rate of purchase reserve points for payment amounts.

In other words, in setup step S100, an administrator of the pension management server 300 inputs the shopping pension information, which includes the reserve rate of the purchase reserve points for the payment amount, the shopping pension payment period, the total shopping pension amount, and the pension start reserve fund, through an input device of the pension management server 300, and then stores the shopping pension information in the first storage module 314 of the shopping pension management unit 310.

In addition, in setup step S100, sales pension information including sales pension payment period, total sales pension amount, and pension start reserve fund is stored in the second storage module 324, so as to provide a sales pension service. As needed, the sales pension information may include a reserve rate of sales reserve points for payment amounts.

In other words, in setup step S100, the administrator of the pension management server 300 inputs the sales pension information, which includes the reserve rate of the sales reserve points for the payment amount, the sales pension payment period, the total sales pension amount, and the pension start reserve fund, through the input device of the pension management server 300, and then stores the sales pension information in the second storage module 324 of the sales pension management unit 320.

In setup step S100, a margin rate of the sales pension product may be stored in the second storage module 324.

In transaction information collection step S200 constituting the shopping pension payment method according to the present invention, the purchase information collection module 311 of the shopping pension management unit 310 collects purchase information including buyer information and payment amount of the shopping pension product from the online shopping mall server 200 or the offline affiliated store terminal 400, so as to provide a shopping pension service.

As needed, in transaction information collection step S200, the sales information collection module 321 of the sales pension management unit 320 collects sales information including seller information and payment amount of the sales pension product from the online shopping mall server 200 or the offline affiliated store terminal 400, so as to provide a sales pension service.

In code registration step S300 constituting the shopping pension payment method according to the present invention, The purchase code registration module 312 of the shopping pension management unit 310 registers and stores a transaction code for identifying the purchase order for each purchase information in the first storage unit, so as to provide a shopping pension service.

As needed, in code registration step S300, the sales code registration module 322 of the sales pension management unit 320 registers and stores a transaction code for identifying the sales order for each sales information in the second storage module 324, so as to provide a sales pension service.

In reserve points calculation step S400 constituting the shopping pension payment method according to the present invention, the purchase point calculation module 313 of the shopping pension management unit 310 calculates reserve points at an agreed reserved rate for each payment amount subject to purchase information to generate purchase reserve point information, so as to provide a shopping pension service.

As needed, in reserve points calculation step S400, the sales reserve calculation module 323 of the sales pension management unit 320 calculates reserve points at an agreed reserve rate for each payment amount subject to sales information to generate sales reserve point information, so as to provide a sales pension service.

In pension payment step S500 constituting the shopping pension payment method according to the present invention, so as to provide a shopping pension service, the shopping pension payment module 315 of the shopping pension management unit 310 analyzes the purchase reserve point information for each transaction code stored in the first storage module 314, and pays the total shopping pension amount divided over the shopping pension payment period to a recipient set in the purchase information registered through the transaction code when the accumulated purchase reserve points of the transaction code reach the pension start reserve fund

As needed, in pension payment step S500, so as to provide the sales pension service, the sales pension payment module 325 of the sales pension management unit 320 analyzes the sales reserve point information for each transaction code stored in the second storage module 324, and pays the total sales pension amount divided over the sales pension payment period to a recipient set in the sales information registered through the transaction code when the accumulated sales reserve points of the transaction code reach the pension start reserve fund.

The shopping pension payment method according to the present invention may further include a recommender information collection step, before the pension payment step. In the recommender information collection step, so as to provide the shopping pension service (shopping bonus payment), the purchase information collection module 311 collects new member information in which a personal identification code assigned to the buyer information is registered as a recommender by a membership information registration module of the shopping pension management unit 310 from the online shopping mall server 200 or the offline affiliated store terminal 400 and stores the collected new member information in the first storage module 314.

The shopping pension payment method according to the present invention may further include a shopping bonus calculation step after the pension payment step.

In the shopping bonus calculation steps, so as to provide the shopping pension service (shopping bonus payment), the shopping bonus payment module 316 of the shopping pension management unit 310 analyzes the buyer information and the new member information when the shopping pension product is purchased, detects the number of recommended members recommended and signing up for the shopping pension product during a previous predetermined period, and calculates a shopping bonus at an agreed payment rate subject to the payment amount based on the number of recommended members.

The shopping pension payment method according to the present invention may include a sales bonus calculation step after the pension payment step.

In the sales bonus calculation step, so as to provide the sales pension service (sales bonus payment), the sales bonus payment module 326 of the sales pension management unit 320 detects a margin rate of the sales pension product sold through the second storage module 324 when the sales pension product is sold, and calculates a sales bonus at an agreed payment rate subject to the payment amount based on the margin rate.

In the setup step S100, transaction information collection step S200, code registration step S300, savings calculation step S400, pension payment step S500, recommender information collection step, shopping bonus calculation step, and sales bonus calculation step, the detailed components (purchase information collection module, purchase code registration module, purchase reserve point calculation module, first storage module, shopping pension payment module, shopping bonus payment module, sales information collection module, sales code registration module, sales reserve point calculation module, second storage module, sales pension payment module, and sales bonus payment module) included in the aforementioned shopping pension payment system are used. Thus, duplicate descriptions will be omitted.

Although the present invention has been described with reference to the exemplary embodiments, it will be apparent to those skilled in the art that various modifications and variations can be made in the present invention without departing from the scope and field of the following appended claims.

**Claims**

**1.** A shopping pension payment system linked to commercial transactions, the shopping pension payment system comprising:

a purchase information collection module for collecting purchase information including buyer information and payment amount when a shopping pension product is purchased;

a purchase code registration module for registering a transaction code for identifying a purchase order for each purchase information;

a purchase reserve point calculation module for calculating reserve points for each senior transaction code at an agreed reserve rate for each payment amount of the transaction code and generating purchase reserve point information for each transaction code;

a first storage module for storing purchase information in which the transaction code is registered, purchase reserve point information for each transaction code, and shopping pension information including a shopping pension payment period, a total shopping pension amount, and pension start reserve fund; and

a shopping pension payment module for analyzing the purchase reserve point information for each transaction code stored in the first storage module, and paying the total shopping pension amount divided over the shopping pension payment period to a recipient set in the purchase information registered through the transaction code when the accumulated purchase reserve points of the transaction code reach the pension start reserve fund.

2. The shopping pension payment system of claim 1, wherein the purchase points calculation module is configured to sort each transaction code into a binary tree structure according to the purchase order, calculate reserve points at an agreed reserve rate for each payment amount of the transaction code, and generate purchase reserve point information for accumulating the reserve points for each senior transaction code connected in the tree.

3. The shopping pension payment system of claim 1, wherein new member information having registered a personal identification code assigned to the buyer information as a recommender is stored in the first storage module, and further comprising:

a shopping bonus payment module that analyzes the buyer information and new member information, when the shopping pension product is purchased, to detect a number of recommended members recommended and signing up for the shopping pension product during a previous predetermined period, and calculates a shopping bonus at an agreed payment rate subject to the payment amount based on the number of recommended members.

4. The shopping pension payment system of claim 1, further comprising:

a sales information collection module for collecting sales information including buyer information and payment amount when a sales pension product is sold;

a sales code registration module for registering a transaction code for identifying a purchase order for each sales information;

a sales reserve point calculation module for calculating reserve points for each senior transaction code at an agreed reserve rate for each payment amount of the transaction code and generating sales reserve point information for each transaction code;

a second storage module for storing sales information in which the transaction code is registered, sales reserve point information for each transaction code, and sales pension information including a sales pension payment period, a total sales pension amount, and pension start reserve fund; and

a sales pension payment module for analyzing the sales reserve point information for each transaction code stored in the second storage module, and paying the total sales pension amount divided over the sales pension payment period to a recipient set in the sales information registered through the transaction code when the accumulated sales reserve points of the transaction code reach the pension start reserve fund.

5. The shopping pension payment system of claim 1, further comprising:

a sales bonus payment module that stores a margin rate of the sales pension product in the second storage module, detects a margin rate of the sales pension product sold through the second storage module when the sales pension product is sold, and calculates a sales bonus at an agreed payment rate subject to the payment amount based on the margin rate.

6. A shopping pension payment method linked to commercial transactions, the method comprising:

a setting step of storing shopping pension information including a shopping pension payment period, a total shopping pension amount, and pension start reserve fund in a first storage module;

a transaction information collection step in which a purchase information collection module collects purchase information including buyer information and payment amount of a shopping pension product from an online shopping mall server or an offline affiliated store terminal;

a code registration step in which a purchase code registration module registers a transaction code for identifying a purchase order for each of the purchase information and stores the registered transaction code in the first storage unit;

a reserve point calculation step in which a purchase reserve point calculation module calculates reserve points for each senior transaction code at an agreed reserve rate for each payment amount of the transaction code and generates purchase reserve point information for each transaction code; and

a shopping pension payment step in which a shopping pension payment module analyzes the purchase reserve point information for each transaction code stored in the first storage module, and pays the total shopping pension amount divided over the shopping pension payment period to a recipient set in the purchase information registered through the transaction code when the accumulated purchase reserve points of the transaction code reach the pension start reserve fund.

7. The shopping pension payment method of claim 6, further comprising:

a recommender information collection step, before the pension payment step, wherein the purchase information collection module collects new member information, in which a personal identification code assigned to the buyer information is registered as a recommender by a membership information registration module, from the online shopping mall server or the offline affiliated store terminal and stores the collected new member information in the first storage module; and

a shopping bonus calculation step, after the pension payment step, wherein a shopping bonus payment module analyzes the buyer information and new member information, when the shopping pension product is purchased, to detect a number of recommended members recommended and signing up for the shopping pension product during a previous predetermined period, and calculates a shopping bonus at an agreed payment rate subject to the payment amount based on the number of recommended members.

8. The shopping pension payment method of claim 6, wherein the setup step includes storing sales pension information including sales pension payment period, total sales pension amount, and pension start reserve fund in a second storage module,

the transaction information collection step includes, by a sales information collection module, collecting sales information including seller information and payment amount of the sales pension product from the online shopping mall server or the offline affiliated store terminal,

the code registration step includes, by a sales code registration module, registering and storing a transaction code for identifying a sales order for each sales information in the second storage module,

the reserve point calculation step includes, by a sales reserve point calculation module, calculating reserve points for each senior transaction code at an agreed reserve rate for each payment amount of the transaction code and generating sales reserve point information for each transaction code, and

the pension payment step includes, by a sales pension payment module, analyzing the sales reserve point information for each transaction code stored in the second storage module, and paying the total sales pension amount divided over the sales pension payment period to a recipient set in the sales information registered through the transaction code when the accumulated sales reserve points of the transaction code reach the pension start reserve fund.

9. The shopping pension payment method of claim 6, wherein the setting step includes storing a margin rate of the sales pension product in the second storage module, and
further comprising:
a sales bonus calculation step in which, after the pension payment step, a sales bonus payment module detects a margin rate of the sales pension product sold through the second storage module when the sales pension product is sold, and calculates a sales bonus at an agreed payment rate subject to the payment amount based on the margin rate.

FIG.1

FIG.2

EP 4 645 200 A1

17

FIG.3

FIG.4

FIG.5

FIG.6

| | |
|---|---|
| Store shopping pension information | ~ S100 |
| Collect purchase information including buyer information and payment amount for shopping pension product | ~ S200 |
| Register transaction code for identifying purchase order for each purchase information | ~ S300 |
| Generate purchase reserve point information by calculating reserve points at agreed reserve rate for each payment amount | ~ S400 |
| Pay total shopping pension amount divided over shopping pension payment period when accumulated purchase reserve points of transaction code reach pension start reserve fund | ~ S500 |

## INTERNATIONAL SEARCH REPORT

| International application No. |
| --- |
| **PCT/KR2022/021524** |

### A. CLASSIFICATION OF SUBJECT MATTER

**G06Q 40/08**(2012.01)i

According to International Patent Classification (IPC) or to both national classification and IPC

### B. FIELDS SEARCHED

Minimum documentation searched (classification system followed by classification symbols)

G06Q 40/08(2012.01); G06Q 10/10(2012.01); G06Q 20/06(2012.01); G06Q 30/02(2012.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 쇼핑(shopping), 연금(pension), 구매(purchase), 거래코드(transaction code), 적립금(accumulated money), 준비금(reserve), 지급(providing)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-1227034 B1 (JEONG, Nu Ri et al.) 28 January 2013 (2013-01-28)<br>See paragraphs [0037]-[0038], [0041] and [0045]-[0046]. | 1,3,5-7,9 |
| A | | 2,4,8 |
| Y | KR 10-1686796 B1 (FOUNDATION OF SOONGSIL UNIVERSITY-INDUSTRY COOPERATION et al.) 16 December 2016 (2016-12-16)<br>See claim 1. | 1,3,5-7,9 |
| Y | KR 10-2015-0074788 A (KIM, Byong San) 02 July 2015 (2015-07-02)<br>See paragraphs [0049] and [0051]-[0052]. | 1,3,5-7,9 |
| Y | KR 10-2013-0119150 A (MASANG SOFT INC.) 31 October 2013 (2013-10-31)<br>See paragraph [0010]. | 3,7 |
| Y | KR 10-2022-0082356 A (SAO, Soon Man) 17 June 2022 (2022-06-17)<br>See paragraph [0028] and claim 4. | 5,9 |

☑ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 September 2023** | **20 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021524** |

**C. DOCUMENTS CONSIDERED TO BE RELEVANT**

| Category* | Citation of document, with indication, where appropriate, of the relevant passages | Relevant to claim No. |
| --- | --- | --- |
| E | KR 10-2483855 B1 (OH, Jung Gun) 03 January 2023 (2023-01-03)<br>See entire document. | 1-9 |

**INTERNATIONAL SEARCH REPORT**
Information on patent family members

| International application No. |
| --- |
| **PCT/KR2022/021524** |

| Patent document cited in search report | | | Publication date (day/month/year) | Patent family member(s) | | | Publication date (day/month/year) |
| --- | --- | --- | --- | --- | --- | --- | --- |
| KR | 10-1227034 | B1 | 28 January 2013 | None | | | |
| KR | 10-1686796 | B1 | 16 December 2016 | KR 10-2012-0001089 | | A | 04 January 2012 |
| KR | 10-2015-0074788 | A | 02 July 2015 | KR 10-2016-0071361 | | A | 21 June 2016 |
| KR | 10-2013-0119150 | A | 31 October 2013 | None | | | |
| KR | 10-2022-0082356 | A | 17 June 2022 | KR 10-2022-0085248 | | A | 22 June 2022 |
| | | | | WO 2022-124461 | | A1 | 16 June 2022 |
| KR | 10-2483855 | B1 | 03 January 2023 | None | | | |

Form PCT/ISA/210 (patent family annex) (July 2022)

**REFERENCES CITED IN THE DESCRIPTION**

**Patent documents cited in the description**

- KR 101427390